Europäisches Patentamt

(19) European Patent Office

Office européen des brevets

(11) Numéro de publication: **0 255 814**
A2

(12) # DEMANDE DE BREVET EUROPEEN

(21) Numéro de dépôt: 87870089.7

(22) Date de dépôt: 26.06.87

(51) Int. Cl.⁴: **A 23 B 7/04**
A 23 B 7/156

(30) Priorité: 27.06.86 BE 216848

(43) Date de publication de la demande:
10.02.88 Bulletin 88/06

(84) Etats contractants désignés:
CH DE FR GB IT LI NL

(71) Demandeur: **Honnay, Raymond**
**Chaussée de Namur, 81**
**B-5661 Sart-Saint-Laurent (BE)**

(72) Inventeur: **Honnay, Raymond**
**Chaussée de Namur, 81**
**B-5661 Sart-Saint-Laurent (BE)**

(74) Mandataire: **De Brabanter, Maurice et al**
**Bureau VANDER HAEGHEN 63 Avenue de la Toison d'Or**
**B-1060 Bruxelles (BE)**

(54) Procédé pour améliorer la conservation de légumes et de fruit frais.

(57) Pour améliorer la durée de conservation de légumes et de fruits frais, on soumet des légumes ou fruits épluchés et lavés à l'eau successivement à une désinfection à l'aide d'un agent oxydant (tel que l'eau oxygénée), puis à un traitement à l'aide d'un agent réducteur (tel que du bisulfite de sodium), les produits ainsi traités étant finalement séchés et conservés à une température de 0,5 à 5° C.

· **Description**

## PROCEDE POUR AMELIORER LA CONSERVATION DE LEGUMES ET DE FRUITS FRAIS

La présente invention est relative à un procédé pour améliorer la conservation de légumes et de fruits frais. Elle concerne, en particulier, un procédé pour améliorer la conservation de légumes frais, tels que pommes de terre, carottes, navets, scorsenères, salsifis, asperges et tubercules analogues et de fruits frais tels que pommes, poires, prunes, abricots, melons, pêches, fraises et groseilles, ces légumes ou fruits épluchés et éventuellement découpés en morceaux ayant, le cas échéant, une forme et des dimensions propres à leur consommation.

Il est connu, notamment par les brevets français no1.289.641 et 1.489.170, de traiter des tubercules dans un bain aqueux contenant un agent antioxydant, tel que du bisulfite ou sulfite de sodium, les tubercules ainsi traités étant, après égouttage, emballés dans des sachets en matière plastique sous vide, dans lesquels on injecte éventuellement un gaz susceptible de ralentir la fermentation, tel que de l'anhydride carbonique.

Ce procédé connu, appliqué à des pommes de terre, permet leur conservation pendant quelques jours seulement.

La présente invention a pour objet un procédé permettant la conservation de tubercules, pendant une durée beaucoup plus longue, celle-ci pouvant être d'au moins deux semaines à la température du réfrigérateur (environ 0,5 à 5°C).

La contamination de tubercules, tels que des pommes de terre, est fonction de leur aspect et de leur origine. Ainsi, après un lavage normal (deux bains après épluchage), les contaminations mesurées varient de $10^4$ à $10^5$ germes par gramme de pommes de terre épluchées.

Si aucun traitement n'est appliqué, les pommes de terre emballées sous vide immédiatement après épluchage et lavage à l'eau se dégradent rapidement et, même à une température de 5°C, on ne peut envisager une conservation de plus de 5 à 6 jours dans les meilleures conditions.

Par ailleurs, si des pommes de terre épluchées et lavées sont traitées uniquement à l'aide d'un agent réducteur, tel que le bisulfite de sodium, des concentrations élevées de cet agent (traitement par 1000 à 5000 ppm de bisulfite pendant une heure) sont nécessaires. Cependant, ces fortes concentrations en agent réducteur favorisent l'apparition d'odeurs nauséabondes après quelques jours de conservation (5 à 10 jours).

Or, on a constaté à présent qu'il est possible d'obtenir une désinfection efficace de légumes et fruits frais, ainsi qu'une bonne conservation de ceux-ci pendant au moins une quinzaine de jours, sans développement d'odeurs désagréables, lorsqu'on soumet successivement ces produits frais à un traitement oxydant et un traitement réducteur avant de les emballer éventuellement et de les conserver à une température d'environ 5°C.

La présente invention concerne, dès lors, un procédé pour améliorer la conservation de légumes et fruits frais, en particulier de tubercules, tels que pommes de terre, carottes, navets, scorsenères, salsifis, asperges et tubercules analogues ainsi que des pommes, poires, prunes, abricots, melons, pêches, fraises, groseilles, etc..., ce procédé étant essentiellement caractérisé en ce qu'on soumet les légumes ou fruits épluchés et lavés successivement à une désinfection à l'aide d'un agent oxydant et à un traitement à l'aide d'un agent réducteur.

Comme agent oxydant, on peut utiliser, dans le cadre de la présente invention, des agents oxydants connus très divers, tels que de l'eau oxygénée, du permanganate de potassium, de l'hypochlorite de sodium, des chloramines ou autres agents oxydants physiologiquement acceptables à faible concentration, sous forme de solution aqueuse de ces agents.

De même, on peut utiliser, comme agent réducteur, du bisulfite de sodium, du sulfite de sodium ou d'autres agents réducteurs physiologiquement acceptables à faible concentration, sous forme de solution aqueuse de ces agents.

Dans une forme d'exécution particulière du procédé suivant la présente invention, on soumet les légumes ou fruits épluchés et lavés à une désinfection par simple immersion dans un bain aqueux d'un agent oxydant contenant environ 50 à 200 ppm de cet agent pendant une durée d'environ 0,5 à 2 heures, tandis qu'après égouttage, on soumet les légumes ou fruits oxydés à un traitement réducteur dans un bain aqueux d'un agent réducteur contenant environ 200 à 800 ppm de cet agent réducteur pendant une durée de 0,5 à 2 heures.

Les traitements oxydant et réducteur peuvent s'effectuer, de préférence, à la température normale ou ambiante des bains de traitement, ces derniers pouvant éventuellement être agités.

Dans son application, par exemple à des pommes de terre, le procédé suivant l'invention comporte avantageusement les étapes successives suivantes :

    1. épluchage des pommes de terre ou autres tubercules et découpage éventuel de ceux-ci en morceaux ou baguettes destinés à la consommation après cuisson ou friture;

    2. lavage avec de l'eau de qualité alimentaire ;

    3. désinfection par immersion dans un bain d'eau oxygénée à 100 ppm pendant une heure ;

    4. après égouttage, trempage dans un bain aqueux de bisulfite de sodium à 500 ppm pendant une heure ;

    5. égouttage et séchage à l'air dans une enceinte propre pendant quelques heures en fonction de la température de l'air, par exemple pendant cinq heures à 5°C ;

    6. mise en sacs de matière plastique et fermeture des sacs après mise sous vide ;

    7. refroidissement rapide à 5°C et conservation à cette température.

Ce traitement permet une conservation de pommes de terre, sans altération perceptible de leurs propriétés organoleptiques, pendant au moins deux semaines dans un réfrigérateur (température : 5°C), cette période étant suffisante pour permettre une commercialisation normale du produit, par exemple par vente dans des magasins et/ou livraison à des restaurants ou friteries.

Le graphique ci-joint permet de comparer les durées de conservation de pommes de terre épluchées en fonction de leur contamination par des germes. Dans ce graphique, la durée de conservation en jours est indiquée en abscisse, tandis que le degré de contamination, exprimé par le logarithme du nombre de germes par gramme de produit, est indiqué en ordonnée.

On distingue, sur ce graphique, les trois zones suivantes :

- Zone A : pommes de terre non traitées ;
- Zone B : pommes de terre traitées uniquement à l'aide de bisulfite de sodium à raison de 1000 à 5000 ppm pendant une heure ;
- Zone C : pommes de terre traitées dans un bain d'eau oxygénée à 100 ppm pendant une heure, puis dans un bain de sulfite de sodium à 500 ppm pendant une heure.

Sur le graphique précité, le trait ondulé représente le seuil au-delà duquel la qualité bactériologique devient insuffisante et au niveau duquel des odeurs nauséabondes apparaissent.

Comme le montre le graphique, la contamination de pommes de terre traitées par le procédé suivant la présente invention est beaucoup plus lente que celle des pommes de terre traitées seulement à l'aide de l'agent réducteur, bien que ce dernier soit utilisé à des concentrations dix fois plus élevées que dans le procédé suivant l'invention. En fait, le procédé suivant l'invention, tout en ne nécessitant que l'emploi de très faibles concentrations d'agents oxydants, permet de réduire considérablement la concentration d'agents réducteurs et permet également d'augmenter, de manière imprévisible, la durée de conservation des produits traités.

Le procédé suivant la présente invention offre également l'avantage de ne nécessiter aucun traitement thermique, ni aucun appareillage spécial pour sa mise en oeuvre sur le plan industriel.

Le procédé suivant l'invention s'est révélé applicable à d'autres légumes frais que les pommes de terre, ainsi qu'à des fruits frais.

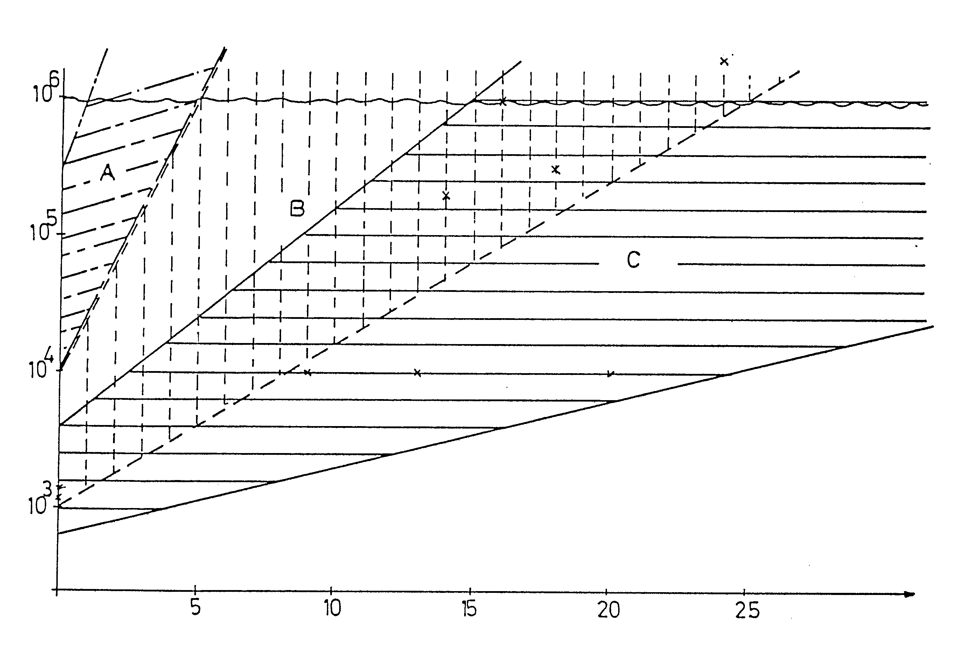

## Revendications

1. Procédé pour améliorer la durée de conservation de légumes et fruits frais, en particulier de pommes de terre, carottes, navets, scorsenères, salsifis, asperges et tubercules analogues ainsi que pommes, poires, prunes, abricots, melons, pêches, fraises, groseilles et autres fruits, caractérisé en ce qu'on soumet les légumes ou fruits épluchés et lavés à l'eau successivement à une désinfection à l'aide d'un agent oxydant et à un traitement à l'aide d'un agent réducteur.

2. Procédé suivant la revendication 1, caractérisé en ce qu'on utilise, comme agent oxydant, de l'eau oxygénée, du permanganate de potassium, de l'hypochlorite de sodium, une chloramine ou un autre agent oxydant physiologiquement acceptable en solution aqueuse.

3. Procédé suivant l'une quelconque des revendications 1 et 2, caractérisé en ce qu'on utilise, comme agent réducteur, du bisulfite ou du sulfite de sodium ou un autre agent réducteur physiologiquement acceptable en solution aqueuse.

4. Procédé suivant l'une quelconque des revendications précédentes, caractérisé en ce qu'on traite les légumes ou fruits frais dans un bain aqueux d'eau oxygénée à une concentration de 50 à 200 ppm.

5. Procédé suivant l'une quelconque des revendications précédentes, caractérisé en ce qu'on traite les légumes ou fruits frais oxydés dans un bain aqueux de sulfite ou bisulfite de sodium à une concentration de 200 à 800 ppm.

6. Procédé suivant l'une quelconque des revendications précédentes, caractérisé en ce qu'on immerge les légumes ou fruits frais dans un bain aqueux d'agent oxydant pendant 0,5 à 2 heures.

7. Procédé suivant l'une quelconque des revendications précédentes, caractérisé en ce qu'on immerge les légumes ou fruits oxydés dans un bain aqueux d'agent réducteur pendant 0,5 à 2 heures.

8. Procédé suivant l'une quelconque des revendications précédentes, caractérisé en ce que les légumes ou fruits soumis aux traitements successifs à l'aide d'un agent oxydant et d'un agent réducteur sont égouttés et séchés à une température ne dépassant pas la température ambiante.

9. Procédé suivant l'une quelconque des revendications précédentes, caractérisé en ce que les légumes ou fruits traités et séchés sont emballés dans des sacs en matière plastique sous vide.

10. Procédé suivant l'une quelconque des revendications précédentes, caractérisé en ce que les légumes traités et séchés sont refroidis à une température d'environ 0,5 à 5°C et conservés à cette température.